# FASCICULE DE BREVET EUROPEEN

(11) **EP 2 165 381 B1**
(45) Date de publication et mention de la délivrance du brevet: **27.04.2016**
(21) Numéro de dépôt: 08805732.8
(22) Date de dépôt: 30.04.2008
(51) Int. Cl.: H01M 8/02, H01M 8/10

(54) **SUBSTRAT POREUX ÉTANCHE POUR PILES À COMBUSTIBLE PLANAIRES ET PACKAGING INTÉGRÉ**
UNDURCHLÄSSIGES PORÖSES SUBSTRAT FÜR PLANARE BRENNSTOFFZELLEN UND INTEGRIERTE VERPACKUNG DAFÜR
IMPERMEABLE POROUS SUBSTRATE FOR PLANAR FUEL CELLS AND INTEGRATED PACKAGING

(30) Priorité: 10.07.2007 FR 0756400
(43) Date de publication de la demande: 24.03.2010
(73) Titulaire: Commissariat à l'Énergie Atomique et aux Énergies Alternatives, 75015 Paris (FR)
(72) Inventeur: CAPRON, Philippe, F-38200 Luzinay (FR); ROUGEAUX, Isabelle, F-38240 Meylan (FR); DELMAS, Jérôme, F-38000 Grenoble (FR); MARTINENT, Audrey, F-38000 Grenoble (FR)
(74) Mandataire: Cabinet Laurent & Charras
(86) Numéro de dépôt international: PCT/FR2008/050778
(87) Numéro de publication internationale: WO 2009/007555

(56) Documents cités:
- WO-A-2007/036705
- US-A1- 2004 048 128
- US-A1- 2004 072 057
- US-B1- 6 344 290

## Description

### DOMAINE DE L'INVENTION

La présente invention concerne le domaine des piles à combustible à électrolyte polymère solide, et leur mise en oeuvre pour la génération de puissances électriques de quelques centaines de milliwatts à quelques dizaines de watts pour les applications portables.

L'invention concerne plus particulièrement un procédé d'élaboration du coeur de pile dans les piles à combustible planaires, et repose sur l'utilisation d'un substrat poreux rendu étanche.

Cette invention concerne les piles à combustible à hydrogène, mais également les piles à combustible liquide, tel que le méthanol, l'éthanol, l'acide formique, l'éthylène glycol ou les solutions de borohydrure de sodium. Elle concerne également les piles à base d'électrolytes de type anionique ou cationique.

### ETAT ANTERIEUR DE LA TECHNIQUE

Il existe globalement deux types d'architectures pour les piles à combustible :
▪ l'architecture de type filtre presse consiste à empiler plusieurs coeurs de piles à combustible. Cette première architecture est généralement privilégiée dans les cas des applications de forte puissance.
▪ alternativement, l'architecture planaire consiste à juxtaposer dans le même plan, plusieurs coeurs de piles à combustible. Cette deuxième application est, quant à elle, privilégiée pour les applications de faible puissance de type nomade ou portable. C'est à ce type d'architecture que s'adresse la présente invention.

L'architecture de type planaire utilise principalement deux technologies de fabrication : La première technologie consiste à utiliser un assemblage électrode - membrane - électrode commerciale (coeur de pile) déposé sur un substrat perméable grâce à un matériau poreux, comme décrit par exemple dans le brevet US 5,759,712.

La seconde technologie consiste à utiliser un autre type de substrat perméable en tant que support du coeur de pile, comme décrit dans la publication de J.S. Wainright et al. « Microfabricated fuel cell », Electrochimica Acta, Volume 48 (2003), Pages 2869-77*.*

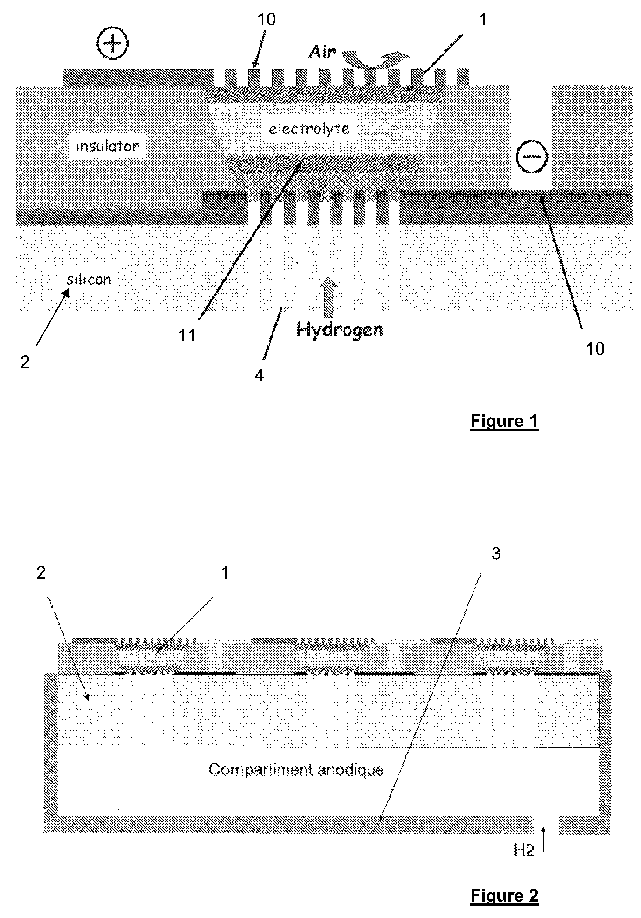

Un tel coeur de pile **1** est fabriqué par empilement de couches successives des matériaux constituant ledit coeur (collecteurs de courant **10**, couches actives **11** et membrane), comme représenté à la figure 1. Selon cette figure, le substrat perméable **2** est réalisé en silicium, et est gravé de canaux **4** qui permettent l'arrivée de l'hydrogène au coeur de pile **1**.

Ainsi, sur un même substrat **2** peuvent être fabriqués plusieurs coeurs de pile **1** qui, mis en série, permettent d'obtenir un générateur possédant les caractéristiques électriques voulues (Cf figure 2). En effet et dans cette configuration, le nombre de coeurs de pile définit la tension du système, et la surface des coeurs de pile définit le courant disponible.

Cette pile, une fois réalisée, nécessite d'être intégrée dans un « packaging », afin de permettre une « connexion » avec le combustible. Ce « packaging » **3**, illustré à la figure 2, est connecté à une cartouche constituant un réservoir de combustible. Il permet ainsi d'alimenter en combustible l'anode de la pile. Par ailleurs, il assure l'étanchéité du système. Ce « packaging » constitue donc une enveloppe protectrice, qui peut prendre la forme d'un capot rapporté et scellé.

Par conséquent, deux matériaux « inertes » sont utilisés lors de la fabrication d'une telle pile à combustible : celui constituant le substrat **2** support des coeurs de pile **1**, et celui constituant le « packaging » **3**. Leur intégration dans la pile à combustible implique des étapes supplémentaires de découpage et d'assemblage, qui rendent peu attractif ce mode de réalisation.

Le document WO 2007/036705 décrit un substrat, dans le contexte d'une pile à combustible, rendu étanche grâce à l'ajout de résine soumise à échauffement pour boucher les pores et canaux de la structure poreuse.
Dans le même contexte, le document US 2004/0072057 mentionne une périphérie étanche, dont la nature n'est pas précisée mais qui apparaît clairement comme une structure distincte du substrat perméable.
Le document US 2004/0048128 décrit quant à lui, comme solution technique pour assurer l'étanchéité du support d'un coeur de pile, l'ajout d'un capot rapporté.
Le document US 6,344,290 décrit un coeur de pile à combustible dont le support présente une zone étanchéifiée obtenue par compression, sur au moins une face, du matériau constituant la zone de diffusion.

Il existe donc un besoin de développer de nouvelles configurations de piles à combustibles planaires, dont le procédé de fabrication est plus aisé et rapide à mettre en oeuvre.

### EXPOSE DE L'INVENTION

L'invention repose sur l'utilisation, comme substrat ou support de coeur de pile dans des piles à combustibles planaires, d'un matériau à la fois perméable au combustible de la pile, mais également étanchéifié sur au moins l'une de ses faces externes.

Ainsi, c'est le même matériau qui présente d'une part une zone poreuse ou perméable de diffusion du combustible, destinée à être en contact avec la pile, et d'autre part au moins une zone étanche ou étanchéifiée (et donc non poreuse et non perméable) qui entoure la zone poreuse et est en contact avec l'extérieur.

C'est en fait le matériau poreux ou perméable qui est rendu localement étanche ou compact. Le fait d'assurer ces deux fonctions antagonistes (perméabilité/étanchéité) à l'aide d'un même matériau assure l'homogénéité de la structure et simplifie les procédés de fabrication.

La perméabilité au combustible du matériau servant de support est avantageusement assurée par deux moyens :
Selon un premier aspect de l'invention, ledit matériau est muni de canaux. Ceci est avantageusement réalisé par gravure, comme rapporté dans l'art antérieur notamment pour le silicium.

Alternativement et selon un second aspect, le matériau perméable est un matériau poreux.

En effet, il a été mis en évidence dans le cadre de l'invention, que le silicium gravé pouvait être facilement remplacé par un matériau poreux, dont les caractéristiques, en termes de diffusion de combustible et de substrat, sont très proches.

Ainsi, il est possible de réaliser des coeurs de pile par empilement de couches successives sur un matériau poreux, tout en conservant une bonne capacité de diffusion du combustible et en conservant les mêmes procédés de fabrication.

Avantageusement, un matériau poreux selon l'invention présente un taux de porosité (rapport entre le volume du vide et le volume total) compris entre 40 et 80%, avec une taille de porosités avantageusement comprise entre 0,5 et 40 µm. Ces caractéristiques concernent le matériau initial mis en oeuvre et ne se retrouvent donc, au niveau du substrat, que dans la partie non étanchéifiée du substrat.

De manière avantageuse et en raison de l'application « pile à combustible » visée, le substrat selon l'invention présente une épaisseur comprise entre 1 et 5 mm.

De manière caractéristique, le matériau mis en oeuvre est un matériau thermoplastique, avantageusement un polymère thermoplastique, et encore plus avantageusement appartenant à la classe des polymères thermoplastiques du type polyoléfine, polyester, polyamide, ou polymère fluoré..., et plus particulièrement du polyéthylène ou du fluorure de polyvinylidène (PVDF) homopolymère ou copolymère avec l'hexafluoropropène. Des tels polymères présentent une température de ramollissement comprise entre 100 et 200°C.

Dans le cadre de l'invention, un matériau adapté doit présenter au moins deux qualités : être perméable et conducteur électrique.

Dans le cas privilégié d'un polymère rendu perméable par la porosité, si un matériau n'est pas poreux intrinsèquement, il peut le devenir. Si certains polymères poreux sont disponibles commercialement, d'autres polymères peuvent être rendus poreux par extrusion avec un agent porogène ou par frittage de grains de polymères.

En outre, si un matériau n'est pas conducteur électrique intrinsèquement, il peut lui être additionné un conducteur électrique.

Un tel matériau peut également avoir une fonction réservoir dans le cas de combustible liquide tel que le méthanol, l'éthanol...

Selon une caractéristique essentielle de l'invention, le support est étanchéifié sur au moins l'une de ses faces extérieures.

Logiquement, les surfaces à étanchéifier sont celles qui ne sont pas vouées à entrer en contact avec les coeurs de pile, notamment celles en contact avec le réservoir de combustible.

De manière caractéristique, le matériau sélectionné est un polymère qui possède la caractéristique d'être thermoplastique, à savoir apte à se ramollir sous l'action de la chaleur. Par conséquent, une élévation de la température localisée et périphérique, réalisée sur toute la surface accessible du polymère perméable après empilement des couches, engendre une déformation du matériau. Ce ramollissement permet de combler les canaux ou les pores du matériau et d'obtenir une couche dense. L'ensemble de piles intégrées possède ainsi une zone de diffusion du combustible, tout en étant étanche vis-à-vis de l'extérieur et de la cathode.

Ainsi, la présente invention permet en outre de s'affranchir du report d'un capot supplémentaire pour assurer la fonction d'étanchéité.

Par conséquent, la nouvelle invention confère également au système un aspect plus compact, lui permettant ainsi de posséder une meilleure densité de puissance en W/kg ou W/l.

Selon un autre aspect, l'invention concerne une pile à combustible planaire comprenant au moins un coeur de pile, avantageusement plusieurs, positionnés sur la face externe non étanchéifiée d'un support tel que décrit précédemment.

L'invention concerne également le procédé de fabrication d'une telle pile à combustible planaire. Il comprend les étapes suivantes :
- préparation d'un support perméable et conducteur électrique ;
- empilement de couches successives pour la formation des coeurs de pile sur l'une des faces externes ;
- étanchéification des autres faces.

Comme déjà dit, la préparation du support peut impliquer l'ajout d'un matériau électrique conducteur et/ou la mise sous forme poreuse.

Dans la seconde étape, le coeur de pile est constitué sur l'une des faces du support, par empilement successif des couches : collecteurs de courant, couches actives et membrane.

Ensuite, les faces du substrat non occupées par les coeurs de pile sont rendues étanches.

Ainsi et selon l'invention, le matériau mis en oeuvre pour le support étant un matériau thermoplastique, avantageusement un polymère thermoplastique, son étanchéification est réalisée par exposition des surfaces non occupées par les coeurs de pile à une température supérieure à la température de ramollissement du matériau, typiquement comprise entre 100 et 200°C. Il se produit alors un ramollissement surfacique générant une couche externe dense.

En pratique et dans un mode de réalisation privilégié, le support est placé dans un moule aux dimensions adaptées et ce moule est porté à la température adéquate.

### EXEMPLE DE REALISATION DE L'INVENTION

La manière dont l'invention peut être réalisée et les avantages qui en découlent, ressortiront mieux de l'exemple de réalisation qui suit, donné à titre indicatif et non limitatif, à l'appui des figures annexées.
La figure 1 représente une vue schématique en section du coeur de pile positionné sur un support selon l'art antérieur.
La figure 2 représente une vue schématique en section d'une pile à combustible planaire, comprenant trois coeurs de pile disposés sur un support, et enveloppée dans un « packaging » étanche selon l'art antérieur.
La figure 3 représente une vue schématique en section de trois coeurs de pile positionnés dans un même plan, sur un substrat poreux selon l'invention.
La figure 4 représente une vue schématique en section d'une pile à combustible planaire comprenant trois coeurs de pile disposés sur un substrat poreux et étanche selon l'invention.

### MODE DE REALISATION DE L'INVENTION

Un substrat en polyéthylène **2**, possédant une porosité de 40% avec des pores de 20 µm, et présentant une épaisseur 1,6 mm est utilisé comme support pour la réalisation de l'empilement du coeur de pile **1**.

Selon l'invention, la première étape consiste à déposer une première couche d'or servant de collecteur électronique **10**. La couche active anodique **11** est ensuite déposée par pulvérisation. Cette couche contient un catalyseur, en l'espèce du platine. Elle est déposée de façon locale comme la couche d'or, pour former à la fin plusieurs coeurs de pile de 1 cm².

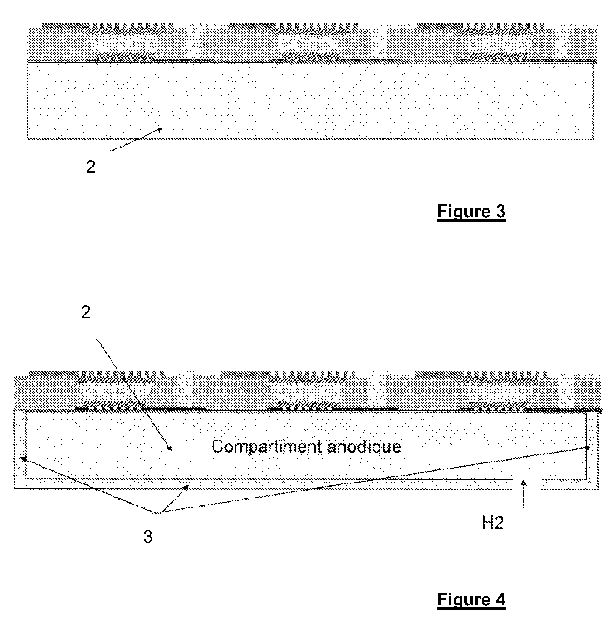

Une solution de Nafion^{®} (marque déposée de Dupont de Nemours), correspondant à une dispersion de polymères perfluorés sulfonés, est ensuite déposée par enduction sur toute la surface du substrat. La couche active cathodique **11** est ensuite réalisée par pulvérisation, de la même façon que la couche anodique, également localisée en vis-à-vis de la couche cathodique (Figure 3).

Cet ensemble est ensuite placé dans un moule aux dimensions appropriées à la taille du substrat **2**. L'ensemble est placé sous une pression de 1 bar pendant 20 secondes, le moule étant porté à une température de 100°C. L'ensemble est ensuite démoulé.

Le compartiment combustible est ainsi étanchéifié. La pile est ensuite connectée à l'hydrogène via un tuyau et un raccord préalablement vissé dans le matériau dense (Figure 4).

## Revendications

1. Support (2) de coeur de pile à combustible planaire réalisé à l'aide d'un matériau poreux et perméable au combustible de la pile, présentant une zone de diffusion du combustible et, au niveau d'au moins l'une de ses faces, une zone étanchéifiée (3), les deux zones étant constituées du même matériau, ***caractérisé* en ce que** ledit matériau est un matériau thermoplastique soumis à un ramollissement surfacique.

2. Support de coeur de pile à combustible planaire selon la revendication 1, ***caractérisé* en ce que** le matériau poreux présente, au niveau de la zone non étanchéifiée, un taux de porosité compris entre 40 et 80%.

3. Support de coeur de pile à combustible planaire selon la revendication 1 ou 2, ***caractérisé* en ce que** le matériau poreux présente, dans la zone non étanchéifiée, une taille de pores comprise entre 0,5 et 40 µm

4. Support de coeur de pile à combustible planaire selon l'une des revendications précédentes, ***caractérisé* en ce qu'**il présente une épaisseur comprise entre 1 et 5 mm.

5. Support de coeur de pile à combustible planaire selon l'une des revendications précédentes, ***caractérisé* en ce que** le matériau est un polymère thermoplastique, avantageusement le polyéthylène ou un polyfluorure de vinylidène (PVDF).

6. Pile à combustible planaire comprenant une pluralité de coeurs de pile (1) positionnés sur une face externe non étanchéifiée d'un support selon l'une des revendications 1 à 5.

7. Procédé pour la fabrication d'une pile à combustible planaire telle que définie dans la revendication 6, comprenant les étapes suivantes :
- préparation d'un support poreux, perméable et conducteur électrique (2) ;
- empilement de couches successives pour la formation des coeurs de pile (1) sur l'une des faces externes ;
- étanchéification des autres faces (3).

8. Procédé de fabrication selon la revendication 7, ***caractérisé* en ce que** le matériau constitutif du support est un polymère thermoplastique, et **en ce que** l'étanchéification est réalisée par exposition des surfaces concernées à une température supérieure à la température de ramollissement dudit matériau.

## Patentansprüche

1. °/ Halterung (2) für den Kern einer planaren Brennstoffzelle, ausgeführt mit einem porösen und für den Brennstoff der Zelle durchlässigen Material, mit einer Diffusionszone des Brennstoffs und einer abgedichteten Zone (3) in Höhe einer oder mehrerer Seiten, wobei die beiden Zonen aus demselben Material bestehen, ***dadurch gekennzeichnet,* dass** es sich bei diesem Material um ein thermoplastisches Material handelt, das einer Oberflächenerweichung ausgesetzt ist.

2. °/ Halterung für den Kern einer planaren Brennstoffzelle gemäß Anspruch 1, ***dadurch gekennzeichnet, dass*** das poröse Material in der nicht abgedichteten Zone einen Porositätsgrad zwischen 40 und 80 % aufweist.

3. °/ Halterung für den Kern einer planaren Brennstoffzelle gemäß Anspruch 1 oder *2, **dadurch gekennzeichnet, dass*** das poröse Material in der nicht abgedichteten Zone eine Porengröße zwischen 0,5 und 50 µm aufweist.

4. °/ Halterung für den Kern einer planaren Brennstoffzelle gemäß einem der Ansprüche, ***dadurch gekennzeichnet, dass*** sie eine Dicke zwischen 1 und 5 mm aufweist.

5. °/ Halterung für den Kern einer planaren Brennstoffzelle gemäß einem der vorstehenden Ansprüche, ***dadurch gekennzeichnet, dass*** es sich bei dem Material um ein thermoplastisches Polymer, am besten um Polyethylen oder ein Polyvinylidenfluorid (PVDF), handelt.

6. °/ Planare Brennstoffzelle mit mehreren Zellenkernen (1), die auf einer nicht abgedichteten Außenseite eines Trägers gemäß einem der Ansprüche 1 bis 5 angeordnet sind.

7. °/ Verfahren zur Herstellung einer planaren Brennstoffzelle wie im Anspruch 6 definiert, das die folgenden Schritte umfasst:
- Herstellung eines porösen, durchlässigen und elektrisch leitenden Trägers (2);
- Stapelung aufeinanderfolgender Schichten zur Bildung von Zellenkernen (1) auf einer der Außenseiten;
- Abdichtung der anderen Seiten (3).

8. °/ Herstellungsverfahren gemäß Anspruch 7, ***dadurch gekennzeichnet, dass*** das Material, aus dem die Halterung besteht, ein thermoplastisches Polymer ist und dass die Abdichtung durchgeführt wird, indem die betroffenen Flächen einer Temperatur ausgesetzt werden, die über der Erweichungstemperatur dieses Materials liegen.

## Claims

1. Support (2) for a planar fuel cell core produced using a porous material that is permeable to the fuel of the cell, having an area for diffusing the fuel and, on at least one of the outer faces of the support, a sealed area (3), both areas being realised of the same material, ***characterized* in that** said material is a thermoplastic material subjected to surface softening.

2. Support for a planar fuel cell core as claimed in claim 1, ***characterized* in that** the porous material is provided at the non-sealed area with a porosity rate of between 40 and 80%.

3. Support for a planar fuel cell core as claimed in claim 1 or 2, ***characterized* in that** the porous material has, in the non-sealed area, a pore size of between 0.5 and 40 µm.

4. Support for a planar fuel cell core as claimed in one of the previous claims, ***characterized* in that** it has a thickness of between 1 and 5 mm.

5. Support for a planar fuel cell core as claimed in one of the previous claims, ***characterized* in that** the material is a thermoplastic polymer, to advantage polyethylene or vinylidene polyfluoride (PVDF).

6. Planar fuel cell including a plurality of cell cores (1) positioned on a non-sealed outer face of a support as claimed in one of claims 1 to 5.

7. Method for the fabrication of a planar fuel cell as specified in claim 6, including the following steps:
- preparing a porous, permeable and electrically conductive support (2);
- stacking successive layers to form the cell cores (1) on one of the outer faces;
- sealing the other faces (3).

8. Method of fabricating a planar fuel cell as claimed in claim 7, ***characterized* in that** the material constituting the support is a thermoplastic polymer, and **in that** the sealing is carried out by exposing the surfaces concerned to a temperature above the softening temperature of said material.
